(19)

Europäisches
Patentamt
European
Patent Office
Office européen
des brevets

(11) **EP 3 104 136 A1**

(12) **EUROPEAN PATENT APPLICATION**
published in accordance with Art. 153(4) EPC

(43) Date of publication:
**14.12.2016 Bulletin 2016/50**

(21) Application number: **15746430.6**

(22) Date of filing: **04.02.2015**

(51) Int Cl.:
***G01F 1/684*** (2006.01)    ***G01F 1/688*** (2006.01)

(86) International application number:
**PCT/JP2015/053069**

(87) International publication number:
**WO 2015/119139 (13.08.2015 Gazette 2015/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **06.02.2014   JP 2014021298**

(71) Applicant: **Tokyo Electric Power Company
Holdings,
Incorporated
Tokyo 100-8560 (JP)**

(72) Inventors:
• **UMEZAWA Shuichi**
  **Tokyo 100-8560 (JP)**
• **TANAKA Katsuhiko**
  **Tokyo 100-8560 (JP)**
• **YOKOSAKA Masaki**
  **Tokyo 100-8560 (JP)**
• **MIYAUCHI Ryoji**
  **Tokyo 100-8560 (JP)**

(74) Representative: **Zacco GmbH
Bayerstrasse 83
80335 München (DE)**

(54) **FLOW SPEED MEASUREMENT METHOD AND FLOW SPEED MEASUREMENT SYSTEM**

(57)     A flow speed measurement method includes conducting a heat exchange at a prescribed part of a surface of a pipe, the flow speed measurement method further includes measuring a temperature distribution in a pipe-axis-direction on the surface of the pipe in a case that the heat exchange has been conducted at the prescribed part, and the flow speed measurement method further includes determining a flow speed of a thermal fluid flowing inside the pipe, based on the temperature distribution measured.

FIG. 2A

EP 3 104 136 A1

## Description

[Technical Field]

The present invention relates to a flow speed measurement method and a flow speed measurement system.

The present application claims priority based on Japanese patent application 2014-021298, filed on February 6, 2014 and includes herein by reference the content thereof.

[Background Art]

Conventionally, as a method for measuring the flow amount of a fluid flowing inside a pipe, in which two temperature sensors positioned upstream and downstream on the surface of the pipe detect the change in temperature of the fluid flowing inside the pipe, and the flow speed and the like of the fluid flowing inside the pipe is determined based on the time difference has been known (refer, for example, to Patent Reference 1).

If the above-noted conventional art is applied to flow speed measurement of steam, there have been cases in which measurement with good accuracy has been impossible. This is because, compared to water, the heat transfer of steam is much lower, so that the heat of the steam flowing inside the pipe does not reach the pipe surface, preventing the thermal sensors from detecting the temperature well. Given this, there has been a desire for the provision of new art enabling measurement of the flow speed of steam flowing inside the pipe from the outside of a pipe.

[Prior Art Reference]

[Patent Reference]

[Patent Reference 1]

Japanese Patent Application Publication No. 2010-261826

[Summary of the Invention]

[Problem to be Solved by the Invention]

One aspect of the present invention provides a flow speed measurement method and a flow speed measurement system capable of measuring the flow speed of steam flowing within a pipe with good accuracy from outside.

[Means to Solve the Problem]

A flow speed measurement method of the first aspect of the present invention includes conducting a heat exchange at a prescribed part of a surface of a pipe, the flow speed measurement method further includes measuring a temperature distribution in a pipe-axis-direction on the surface of the pipe in a case that the heat exchange has been conducted at the prescribed part, and the flow speed measurement method further includes determining a flow speed of a thermal fluid flowing inside the pipe, based on the temperature distribution measured.

In the above-noted first aspect, the flow speed measurement method further includes conducting the heat exchange includes heating the prescribed part.

In the above-noted first aspect, the flow speed measurement method further includes measuring the temperature distribution that measures the temperature of the surface of the pipe at the prescribed part, at upstream from the prescribed part, and at downstream from the prescribed part.

In the above-noted first aspect, the flow speed measurement method further includes measuring the temperature distribution that measures the temperature at a plurality of locations on the pipe in a circumferential direction of the pipe.

In the above-noted first aspect, the flow speed measurement method further includes measuring the temperature distribution that measures an average value of the temperature at the plurality of locations.

In the above-noted first aspect, the flow speed measurement method further includes conducting the heat exchange that conducts the heat exchange at a prescribed part of the surface of the pipe using an annularly shaped heater.

In the above-noted first aspect, the flow speed measurement method further includes the pipe covered with a thermal insulation material at least at one of the prescribed part, upstream from the prescribed part and downstream from the prescribed part is used.

In the above-noted first aspect, the flow speed measurement method further includes determining the flow speed of the thermal fluid includes determining the flow speed of a thermal fluid that is steam.

A flow speed measurement system of the second aspect of the present invention includes a heat exchanger that conducts a heat exchange at a prescribed part on a surface of a pipe, the flow speed measurement system further includes a flow speed measurement system further includes a temperature measurer that measures a temperature distribution in a pipe-axis-direction on the surface of the pipe in a case that the heat exchange has been conducted at the prescribed part, and the flow speed measurement system further includes a flow speed determiner that determines a flow speed of a thermal fluid flowing inside the pipe, based on the temperature distribution measured.

In the above-noted second aspect, the heat exchanger may be a heating device, and further the heating device may be annularly shape heater.

In the above-noted second aspect, the flow speed measurement system further includes a temperature measurer that measures the temperature of the surface of the pipe at the prescribed part, at upstream from the prescribed part, and at downstream from the prescribed part.

In the above-noted second aspect, the flow speed measurement system further includes the temperature measurer that measures a temperature at a plurality of locations in the circumferential direction of the pipe.

In the above-noted second aspect, the flow speed measurement system further includes the flow speed determiner that determines the flow speed of the thermal fluid that is steam.

According to the flow speed measurement method and flow speed measurement system, it is possible to measure the flow speed of steam flowing inside a pipe from the outside with good accuracy.

[Brief Description of the Drawings]

FIG. 1 shows the general constitution of a flow speed measurement system according to the present embodiment.

FIG. 2A shows the constitution of the main parts of the flow speed measurement system according to the present embodiment.

FIG. 2B shows the constitution of the main parts of the flow speed measurement system according to the present embodiment.

FIG. 2C shows the constitution of the main parts of the flow speed measurement system according to the present embodiment.

FIG. 3 shows a control unit according to the present embodiment in schematic form.

FIG. 4 shows the result of determining the heat transfer coefficient inside a pipe by calculation according to the present embodiment.

FIG. 5 shows the temperature distribution acquired from the measurement results by the temperature measurement unit according to the present embodiment.

FIG. 6 shows the relationship between the steam flow speed and the temperature distribution determined by a computed simulation according to the present embodiment.

[Embodiments]

A number of embodiments of the present invention will be described below, with references made to the drawings. A flow speed measurement system according to the present embodiment can measure the flow speed of a thermal fluid (for example, steam) flowing inside a pipe disposed between a steam producing apparatus such as a boiler and a load apparatus.

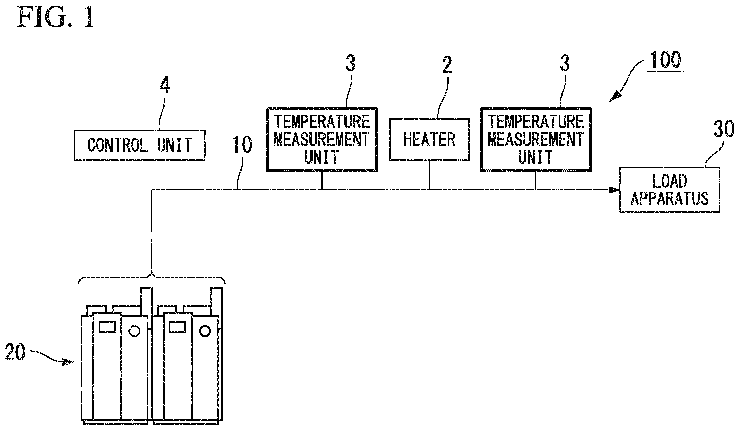

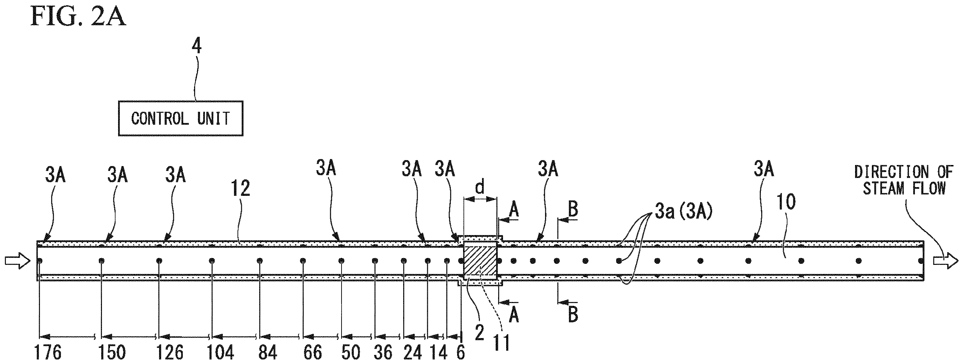

FIG. 1 shows the general constitution of the flow speed measurement system according to the present embodiment. FIG. 2A to FIG. 2C shows the constitution of the main parts of the flow speed measurement system according to the present embodiment.

A flow speed measurement system 100 according to the present embodiment, as shown in FIG. 1, includes a heater (heat exchanger) 2, a temperature measurement unit 3, and a control unit (flow speed calculator) 4. In FIG. 1, a pipe 10 is disposed between a steam producing apparatus 20 (for example, a boiler) and a load apparatus 30. Steam from the steam producing apparatus 20 flows in the pipe 10 and is sent to the load apparatus 30. In the load apparatus 30, the steam or the heat thereof is used. The steam exhausted from the load apparatus 30 is reclaimed as drain and collected into a hot well tank (not shown), after which it is supplied again to the steam producing apparatus 20.

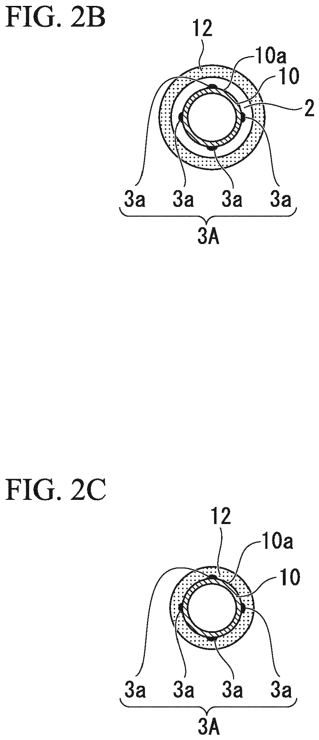

The heater 2 is for heating a prescribed part by heat exchange with the surface 10a of the pipe 10. In the present embodiment, the heater 2 is constituted by, for example, an annularly shaped heater and, as shown in FIG. 2B, is disposed along the circumferential direction at a prescribed position on the pipe 10. By doing this, the heater 2 uniformly heats the surface 10a of the pipe 10 at the prescribed part of the pipe 10 (the installation part 11 of the heater 2). The heater 2 is electrically connected to the control unit 4, which controls its operation.

Temperature sensor groups 3A are disposed at both sides of the installation part 11 of the heater 2 on the surface 10a of the pipe 10 (upstream side and downstream side). The installation position of each temperature sensor group 3A is determined in accordance with the distance from the installation part 11. For example, taking the example of the side upstream from the installation part 11, the sensors of the temperature sensor group 3A are installed at distances of 0 mm, 6 mm, 14 mm, 24 mm, 36 mm 50 mm, 66 mm, 84 mm, 104 mm, 126 mm, 150 mm, and 176 mm from the end face of the installation part 11. In this case, a distance of 0 mm from the end face of the installation part 11 means that a temperature sensor group 3A is installed along the end face of the heater 2. FIG. 2B shows as the cross-sectional structure of the pipe 10 in the vicinity of the downstream side end face of the installation part 11 (along the viewing line A-A), and FIG. 2C shows the vicinity at a distance of 24 mm from the downstream side end face of the installation part 11 (along the viewing line B-B).

As shown in FIG. 2A, the temperature sensor groups 3A are installed so that, as the distance from the installation part 11 increases, the successive distances between neighboring temperature sensor groups 3A increase by 2 mm at a time. Therefore, the closer are the temperature sensor groups 3A to the installation part 11 (heater 2), the more concentrated are the sensors. This enables detection of the temperature of the surface 10a of the pipe 10 in the vicinity of the installation part 11 will good accuracy.

The temperature measurement unit 3 is constituted by a plurality of (for example, 12 in the present embodiment) temperature sensor groups 3A. The temperature sensor groups 3A are disposed along the axis direction of the pipe 10 at the surface 10a of the pipe 10. Each temperature sensor group 3A includes a plurality of temperature sensors 3a, each of which measures the temperature of the surface 10a of the pipe 10. In the present embodiment, each temperature sensor group 3A is constituted by four temperature sensors 3a. The four temperature sensors 3a are disposed uniformly in the circumferential direction on the surface 10a of the pipe 10. That is, the four temperature sensors 3a are positioned 90 degrees apart in the circumferential direction of the pipe 10. Each temperature sensor group 3A outputs the average value of values measured by the four temperature sensors 3a. In this manner, by taking the average of values measured at a plurality of locations on the surface 10a of the pipe 10 as the measured value, the temperature sensor group 3A can output measurement results (temperature) with high reliability.

Based on a constitution such as this, the temperature measurement unit 3 can measure the temperature distribution of the surface 10a in the axis direction of the pipe 10 from the measurement results of the temperature sensor groups 3A. The temperature distribution measured by the temperature measurement unit 3 is sent to the control unit 4.

At least a part of the surface 10a of the pipe 10 is covered by a thermal insulation material 12. In the present embodiment, the thermal insulation material 12 is installed along the axis direction so as to cover the heater 2 and the temperature measurement unit 3 (temperature sensors 3a) provided on the surface of the pipe 10.

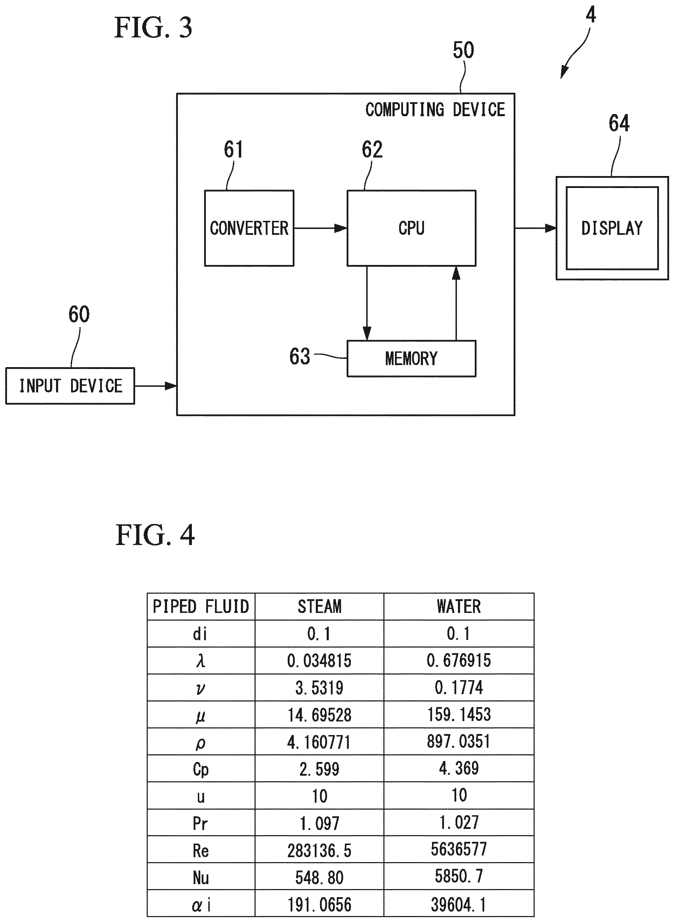

FIG. 3 shows a control unit 4 in schematic form. In FIG. 3 the computing device 50 is, for example, a computer system. In addition to the computing device 50, the control unit 4 has an input device 60 and a display (output device) 64. The computing device 50 has, for example, a converter 61, such as an A/D converter, a CPU (processing means) 62, and a memory 63. The measurement data (temperature distribution) sent from the temperature measurement unit 3 of the flow speed measurement system 100 is, as necessary, converted by the converter 61 or the like, and is acquired by the CPU 62. Initial values, temporary data, and the like are acquired by the computing device 50, via the input device 60 or the like. The display 64 displays information regarding input data, information regarding calculations, and the like.

The CPU 62, based on measurement data and on information stored in the memory 63, can calculate the flow speed of steam flowing inside the pipe 10. The CPU 62, for example, uses the measurement results (temperature distribution of the pipe 10) of the temperature measurement unit 3 to calculate the flow speed of steam flowing inside the pipe 10 from the information stored in the memory 63, as will be described later. That is, a flow speed calculator that calculates the flow speed of steam flowing inside the pipe constitutes the control unit 4.

The flow speed measurement system 100 and the measurement method thereof focus on the point that the internal pipe heat transfer coefficient within a pipe changes in accordance with the flow speed of a fluid flowing inside the pipe, and the point that, accompanying a change in the heat transfer coefficient, the heat applied to surface of the pipe causes a temperature distribution.

First, the point of the internal pipe heat transfer coefficient changing in accordance with the flow speed of a fluid (hereinafter referred to as the piped fluid) flowing inside a pipe will be described.

In the following, Equation (1) is the Dittus-Boelter equation, Equation (2) is the equation indicating the Nusselt number, Equation (3) is the equation indicating the Prandtl number, and Equation (4) is the equation indicating the Reynolds number.

$$\mathrm{Nu} = 0.023 \times \mathrm{Re}^{0.8} \times \mathrm{Pr}^{0.4} \qquad \dots (1)$$

$$\mathrm{Nu} = \alpha i \times di/\lambda \qquad \dots (2)$$

$$\mathrm{Pr} = \nu \times \rho \times \mathrm{Cp}/\lambda \qquad \dots (3)$$

$$\mathrm{Re} = u \times di/\nu \qquad \dots (4)$$

In the above:

di is the inner diameter of the pipe,
$\lambda$ is the thermal conductivity (W/m/K),
$\nu$ is the kinematic viscosity coefficient (m$^2$/s),
$\rho$ is the density of the fluid (kg/m$^3$),
Cp is the specific heat (KJ/Kg/K),
u is the flow speed of the piped fluid, and
$\alpha i$ is the heat transfer coefficient of the internal pipe.

FIG. 4 shows the results determined by computing from the equations (1) to (4) the thermal transfer coefficient $\alpha i$ inside the pipe for the piped fluids (fluids flowing inside the pipe) of steam and water. In this computation, the piped fluid is taken to be saturated steam at a pressure of 800 kPa, and the above-noted di (inner diameter of the pipe) is taken to be 0.1 m.

As shown in FIG. 4 the thermal transfer coefficient $\alpha i$ of the steam is approximately 191 and the thermal transfer coefficient $\alpha i$ of water is approximately 39604. That is, if the thermal transfer coefficient $\alpha i$ of steam is taken to be 1, the thermal transfer coefficient $\alpha i$ of water, with respect to steam, would be 207.28. It can be seen that, compared to water, the thermal transfer coefficient of steam is sufficiently low. Therefore, if it can been seen that, if the steam flow speed changes, the measurement of the change in outside (surface) temperature of the pipe by the change in the manner in which the heat of the steam inside the pipe propagates is extremely difficult.

According to the above-noted Equations (1) to (4), it can be seen that the thermal transfer coefficient αi inside the pipe is proportional to the 0.8th power of the flow speed u of the piped fluid.

In this case, the thermal transfer coefficient αi inside the pipe can be taken as being the ease with which heat propagates in the piped fluid from the inside to the outside in the radial direction of the pipe (hereinafter, referred to as the internal pipe heat transfer).

That is, if the flow speed of the piped fluid is high, the internal pipe heat transfer in the piped fluid becomes relatively large, and if the flow speed of the piped fluid is low, the internal pipe heat transfer in the piped fluid becomes relatively small.

In this manner, it can be verified that the internal pipe heat transfer changes in accordance with the flow speed of the piped fluid.

Continuing, the point of the occurrence of a temperature distribution in the surface of the pipe by the heat applied to the surface of pipe accompanying the changing of the internal pipe heat transfer will now be described.

In steel, which is a generally used material to constitute a pipe, compared to the internal pipe heat transfer by the fluid, thermal transfer in the pipe axis direction is sufficiently large, that being particularly prominent in the case of steam. For this reason, for example, if heat is applied to the surface of the pipe, the applied heat is transferred not internally (in the radial direction), but mainly along the surface of the pipe (in the pipe axis direction).

In contrast, a considerable amount of the heat applied to the surface of the pipe is transferred inside the pipe. The amount of thermal transfer toward the inside of the pipe is influenced by the size of the above-described internal pipe heat transfer.

That is, if the internal pipe heat transfer is relatively large (if the flow speed of the piped fluid is high), because it is easy for heat to be transferred inside the pipe, the heat applied to the surface of the pipe is transferred inside the pipe. Thus, it was learned that the temperature distribution on the surface of the pipe does not broaden in the pipe axis direction.

If the internal pipe heat transfer is relatively small (if the flow speed of the piped fluid is low), because it is difficult for heat to be transferred inside the pipe, the heat applied to the surface of the pipe transfers along the surface, rather than inside the pipe. Thus, it was learned that the temperature distribution on the surface of the pipe broadens in the pipe axis direction.

The inventors, based on the learnings described above, discovered that, when a pipe is heated from outside, it is possible to predictively compute the flow speed of the fluid flowing inside the pipe based on the temperature distribution occurring in the pipe axis direction, and completed the flow speed measurement system and flow speed measurement method of one aspect of the present invention.

Continuing, the flow speed measurement method using the flow speed measurement system 100 according to the present embodiment will now be described.

First, the control unit 4 drives the heater 2 to obtain the state in which the surface 10a of the pipe 10 is heated (first step).

Continuing, the control unit 4 starts the supply of steam from the steam producing apparatus 20 to the load apparatus 30, via the pipe 10. By the flow of steam in the pipe 10, the thermal transfer coefficient within the pipe in the radial direction changes.

The temperature measurement unit 3 measures the temperature in the axis direction of the pipe 10. Specifically, the temperature measurement unit 3 measures the temperature distribution of the surface 10a in the pipe axis direction of the pipe 10 by each of the temperature sensor groups 3A (second step).

When measuring the temperature distribution of the pipe 10, for example, the method of controlling so that the initial temperature of the heater 2 is constant and the method of making the heat entering from the heater 2 constant can be envisioned. Because the method of making the heat entering from the heater 2 constant enables the temperature difference (temperature distribution) to be made larger, it enables an improvement in the temperature sensitivity.

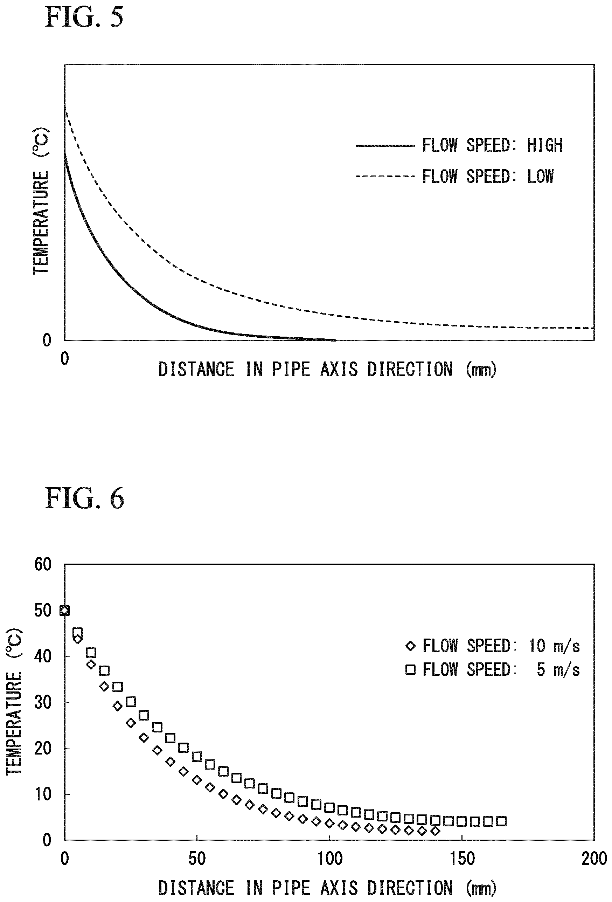

The control unit 4, for example, from the measurement results by the temperature measurement unit 3, acquires data in which the temperature distribution of the surface 10a of the pipe 10, as shown by the solid line in FIG. 5, does not relatively broaden in the pipe axis direction. The case in which the temperature distribution does not broaden in the pipe axis direction is one in which the internal pipe heat transfer increases because of the high flow speed of the steam, and the heat applied from the heater 2 transfers within the pipe 10.

The control unit 4 acquires data in which the temperature distribution of the surface 10a of the pipe 10, as shown by the broken line in FIG. 5 relatively broadens in the pipe axis direction. The case in which the temperature distribution broadens in the pipe axis direction is one in which the internal pipe thermal transfer decreases because of the low flow speed of the steam, and the heat applied from the heater 2 transfers to outside of the pipe 10.

The measurement results (temperature distribution data) of the temperature measurement unit 3 are sent to the control unit 4. The control unit 4 uses the measurement data of temperature distribution of the pipe 10 to compute the flow speed of steam flowing inside the pipe 10 from information that had been stored in the memory 63 (refer to FIG. 3) (third step).

The memory 63 has stored therein information regarding the steam flow speed and the temperature distribution obtained, for example, by prior experiments or simulation. The control unit 4 can read out the above-noted information stored in the memory 63 and, by comparing the measured values of the temperature distribution of the pipe 10, can compute the flow speed of steam corresponding to the actually measured temperature distribution (measurement results of the temperature measurement unit 3).

For example, an example of the determination of the information (relationship between the steam flow speed and the temperature distribution) stored in the memory 63 is determined by a computed simulation will be described.

The conditions for the computed simulation are a pipe inner diameter of 100 mm, a pipe outer diameter of 110 mm, saturated steam at 0.8 MPa flowing at a flow speed of 10 m/s inside the pipe, and the material constituting the pipe being steel with thermal conductivity of 50 W/m/K. The mesh size was made 5 mm in the pipe axis direction and the pipe thickness direction. Asymptotic calculation was done so that amount of heat entering the mesh is the same as the amount of heat leaving the mesh.

Specifically, in this computation, the amount of heat entering the mesh in the initial mesh is the heat conducted from the heater 2, and in the next mesh is the heat entering by thermal conduction is from the steel of the neighboring mesh. The amount of heat leaving the mesh is, for all meshes, the heat leaving by heat transfer to the steam flow within the pipe.

The temperature distribution is determined by performing an asymptotic calculation of the thermal balance of each mesh, with the heat entering from the heater 2 as the heat leaving and propagating to the steam.

The conditions for computing the temperature distribution are an initial temperature of 50° C at steam flow speeds of both 10 m/s and 5 m/s. In this case, the entering heat at the steam flow speed of 10 m/s is 118.9 W per unit cell and the entering heat at the steam flow speed of 5 m/s is 88.4 W per unit cell.

By such a computed simulation, for example, it is possible to acquire the data shown in the graph of FIG. 6 (data indicating the relationship between the steam flow speed and the temperature distribution). In the memory 63 are stored various data obtained by appropriately changing the conditions of the above-noted computed simulation (flow speed, pipe thickness, steam pressure, pipe material, inner diameter, and shape).

The control unit 4 compares the results of measurement (temperature distribution) by the temperature measurement unit 3 such as shown in FIG. 5 and the multiple data such as shown in FIG. 6 and stored in the memory 63, and determines as the flow speed of the steam flowing within the pipe 10 the flow speed corresponding to the temperature distribution.

As described above, according to the present embodiment, it is possible to determine the flow speed of the steam based on the temperature distribution occurring in the surface 10a of the pipe 10, without using the temperature of the steam, which is the internal fluid, the temperature of which cannot be directly measured.

Therefore, the flow speed of the steam can be determined from outside the pipe 10, both simply and with good accuracy.

Although an embodiment of the present invention has been described above, there is no restriction to the above-noted embodiment, and appropriate changes can be made within the scope of spirit of the invention. For example, although in the above-noted embodiment the heater 2 and the temperature measurement unit 3 (each of the temperature sensors 3a) have been described as the example of being constituted so as to be covered by the thermal insulation material 12, this is not a restriction. For example, if the control unit 4 is in a form that, taking into consideration radiation of heat from the surface 10a of the pipe 10, corrects the measurement data (temperature distribution) sent from the temperature measurement unit 3, there is no need to cover the surface 10a of the pipe 10 with the thermal insulation material 12. Alternatively, the constitution may be such that only a part of the surface 10a (the part at which the temperature measurement unit 3 is installed) is covered with the thermal insulation material 12.

Although the above-noted embodiment takes the example of the case of measuring the flow speed of steam as the thermal fluid flowing inside a pipe, this does not restrict the present invention, which can be applied to the case of measuring the flow speed of heated water flowing inside a pipe. Additionally, the fluid flowing inside a pipe may be Freon, ammonia, LNG (liquefied natural gas), or the like, and the present invention may also be applied to the measurement of the flow speed of these fluids.

Also, although in the above-noted embodiment, the heater 2 has been shown as an example of a heat exchanger that conducts heat exchange with the pipe 10, this does not restrict the present invention. For example, a cooler that cools the surface 10a of the pipe 10 may be used as the heat exchanger, and the flow speed of the steam flowing inside the pipe 10 may be measured based on the temperature distribution occurring in the pipe axis direction of the pipe 10 by cooling. In this case, if the steam is saturated steam or superheated steam that is close to being saturated steam, because there is a possibility of condensation occurring, it is necessary to consider that when computing the heat transfer coefficient.

[Description of the Reference Symbols]

2　　　　Heater (heat exchanger, heating device)
3　　　　Temperature measurement unit
4　　　　Control unit (flow speed calculator)
10　　　Pipe
10a　　Surface
11　　　Installation part (prescribed part)
12　　　Thermal insulation material

100 Flow speed measurement system

**Claims**

1. A flow speed measurement method comprising:

    conducting a heat exchange at a prescribed part of a surface of a pipe;
    measuring a temperature distribution in a pipe-axis-direction on the surface of the pipe in a case that the heat exchange has been conducted at the prescribed part; and
    determining a flow speed of a thermal fluid flowing inside the pipe, based on the temperature distribution measured.

2. The flow speed measurement method according to claim 1,
   wherein conducting the heat exchange comprises heating the prescribed part.

3. The flow speed measurement method according to claim 1 or 2,
   wherein measuring the temperature distribution comprises measuring the temperature of the surface of the pipe at the prescribed part, at upstream from the prescribed part, and at downstream from the prescribed part.

4. The flow speed measurement method according to any one of claim 1 to 3,
   wherein measuring the temperature distribution comprises measuring the temperature at a plurality of locations on the pipe in a circumferential direction of the pipe.

5. The flow speed measurement method according to claim 4,
   wherein measuring the temperature distribution further comprises measuring an average value of the temperature at the plurality of locations.

6. The flow speed measurement method according to any one of claim 1 to 5,
   wherein conducting the heat exchange comprises conducting the heat exchange at a prescribed part of the surface of the pipe using an annularly shaped heater.

7. The flow speed measurement method according to any one of claim 1 to 6,
   wherein the pipe covered with a thermal insulation material at least at one of the prescribed part, upstream from the prescribed part and downstream from the prescribed part is used.

8. The flow speed measurement method according to any one of claim 1 to 7,
   wherein determining the flow speed of the thermal fluid comprises determining the flow speed of the thermal fluid that is steam.

9. A flow speed measurement system comprising:

    a heat exchanger configured to conduct a heat exchange at a prescribed part on a surface of a pipe;
    a temperature measurer configured to measure a temperature distribution in a pipe-axis-direction on the surface of the pipe in a case that the heat exchange has been conducted at the prescribed part; and
    a flow speed determiner configured to determine a flow speed of a thermal fluid flowing inside the pipe, based on the temperature distribution measured.

10. The flow speed measurement system according to claim 9,
    wherein the heat exchanger is a heating device.

11. The flow speed measurement system according to claim 10,
    wherein the heating device is an annularly shaped heater.

12. The flow speed measurement system according to any one of claim 9 to 11,
    wherein the temperature measurer is configured to measure the temperature of the surface of the pipe at the prescribed part, at upstream from the prescribed part, and at downstream from the prescribed part.

13. The flow speed measurement system according to any one of claim 9 to 12,
    wherein the temperature measurer is configured to measure a temperature at a plurality of locations in a circumferential direction of the pipe.

14. The flow speed measurement system according to any one of claim 9 to 13,
    wherein the flow speed determiner is configured to determine the flow speed of the thermal fluid that is steam.

FIG. 1

FIG. 2A

CONTROL UNIT 4

DIRECTION OF
STEAM FLOW

EP 3 104 136 A1

9

FIG. 2B

12
10a
10
2
3a 3a 3a 3a
3A

FIG. 2C

12
10a
10
3a 3a 3a 3a
3A

FIG. 3

FIG. 4

| PIPED FLUID | STEAM | WATER |
|---|---|---|
| di | 0.1 | 0.1 |
| λ | 0.034815 | 0.676915 |
| ν | 3.5319 | 0.1774 |
| μ | 14.69528 | 159.1453 |
| ρ | 4.160771 | 897.0351 |
| Cp | 2.599 | 4.369 |
| u | 10 | 10 |
| Pr | 1.097 | 1.027 |
| Re | 283136.5 | 5636577 |
| Nu | 548.80 | 5850.7 |
| αi | 191.0656 | 39604.1 |

## FIG. 5

## FIG. 6

<div align="center">

**INTERNATIONAL SEARCH REPORT**

</div>

| | International application No. |
|---|---|
| | PCT/JP2015/053069 |

**A.   CLASSIFICATION OF SUBJECT MATTER**
*G01F1/684*(2006.01)i, *G01F1/688*(2006.01)i

According to International Patent Classification (IPC) or to both national classification and IPC

**B.   FIELDS SEARCHED**

Minimum documentation searched (classification system followed by classification symbols)
G01F1/68-1/699

Documentation searched other than minimum documentation to the extent that such documents are included in the fields searched
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| X<br>Y | JP 60-236030 A  (Denka Consultant & Engineering Co., Ltd.),<br>22 November 1985 (22.11.1985),<br>page 1, right column, line 17 to page 2, lower left column, line 10; fig. 1<br>(Family: none) | 1-3,9-12<br>4-8,13-14 |
| X<br>Y | JP 60-192221 A  (Denka Consultant & Engineering Co., Ltd.),<br>30 September 1985 (30.09.1985),<br>entire text; all drawings<br>(Family: none) | 1-3,9-12<br>4-8,13-14 |
| X<br>Y | JP 04-339219 A  (Tokico, Ltd.),<br>26 November 1992 (26.11.1992),<br>paragraphs [0002] to [0003]; fig. 3 to 4<br>(Family: none) | 1-3,9-12<br>4-8,13-14 |

| ☒   Further documents are listed in the continuation of Box C. | ☐   See patent family annex. |
|---|---|

\*   Special categories of cited documents:
"A"   document defining the general state of the art which is not considered   to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search<br>    20 February 2015 (20.02.15) | Date of mailing of the international search report<br>    03 March 2015 (03.03.15) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2015/053069

C (Continuation). DOCUMENTS CONSIDERED TO BE RELEVANT

| Category* | Citation of document, with indication, where appropriate, of the relevant passages | Relevant to claim No. |
|---|---|---|
| X | JP 04-339218 A (Tokico, Ltd.), | 1-3,9-12 |
| Y | 26 November 1992 (26.11.1992), paragraph [0007]; fig. 2, 6 (Family: none) | 4-8,13-14 |
| X | JP 51-126863 A (Yokogawa Electric Works Ltd.), | 1-3,9-12 |
| Y | 05 November 1976 (05.11.1976), entire text; all drawings (Family: none) | 4-8,13-14 |
| Y | JP 2011-209190 A (Takasago Thermal Engineering Co., Ltd.), 20 October 2011 (20.10.2011), paragraphs [0012] to [0013], [0015] (Family: none) | 4-8,13-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014021298 A

- JP 2010261826 A